# EUROPEAN PATENT APPLICATION

(11) **EP 4 009 033 A1**
(43) Date of publication of application: **08.06.2022**
(21) Application number: 21211178.5
(22) Date of filing: 29.11.2021
(51) Int. Cl.: G01N 15/14

(54) **APPARATUS AND METHOD FOR STUDYING AND ANALYSING CHARACTERISTICS OF A CELLULAR SAMPLE**

(30) Priority: 01.12.2020 GB 202018910
(71) Applicant: University of Exeter, Exeter, Devon EX4 4QJ (GB)
(72) Inventor: Chimerel, Catalin, Exeter, EX4 4QJ (GB); Nikiforov, Petar, Exeter, EX4 4QJ (GB)
(74) Representative: Wilson Gunn

(57) **Abstract**

The invention provides an apparatus for studying and analysing characteristics of a cellular sample, the apparatus comprising:
a primary flow path through which one or more cells of a cellular sample may be passed, in use, the primary flow path being configured such that an environmental stimulus is applied to the one or more cells as the one or more cells are passed through the primary flow path;
an imaging module configured to obtain:
a first image or image set of the one or more cells of the cellular sample prior to application of the environmental stimulus; and
a second image or image set of the one or more cells following application of the environmental stimulus; and

an image analysis module configured to analyse the first and/or second images or image sets and determine a response of the one or more cells to the applied environmental stimulus in dependence thereon.

## Description

### Technical Field of the Invention

The present invention relates to an apparatus and method for studying and analysing characteristics of a cellular sample, and in particular to identifying phenotypic responses to given environmental stimuli. The invention extends to means for sorting and separating cells within a sample based on said responses.

### Background to the Invention

The study and understanding of cellular heterogeneity is a fundamental aim of biology since the chemical, structural and morphological differences between cells are related to their physiological functions. The factors which determine cellular heterogeneity are not only genetic but can also be epigenetic or stochastic in nature. For example, cells with identical genomes are able to differentiate and proliferate in order to assemble the functional tissues and organs of multicellular organisms. Cellular heterogeneity is also widely observed within populations of otherwise identically differentiated cells and manifests itself as phenotypic differences between cell subpopulations. Such phenotypic differences can, however, be obscured or completely masked by traditional methods of studying cellular behaviour using ensemble-averaged measurements.

The ability to move away from using population-averaged analysis and to derive models of cellular behaviour using statistics based on single-cell measurements relies on the development of technologies for the rapid, accurate and efficient sorting of complex mixtures of cells into specific and well-defined cell populations for further study. Currently cell sorting technology relies on separating cells either according to characteristics, which are intrinsic to the cells (e.g. cell size or shape), or according to markers, which have been pre-loaded inside/on the cells prior to sorting (e.g. fluorescent tags), but it would be advantageous to be able to do so based on a real-time response to a given stimulus or set of stimuli.

High-throughput fluorescence microscopy and fluorescence-activated cell sorting (FACS) are two very powerful, but currently separate tools to investigate cell biology using fluorescent probes.

High-throughput fluorescence microscopy has automatized imaging capabilities that specifically read out the biological function of interest using high throughput image acquisition and analysis. Most notable for this method is the ability to monitor the response of individual cells to multiple treatments using tracking algorithms. Employing different conditions and perturbations across different timescales, high-throughput fluorescence microscopy of living cells can provide parallel monitoring and identification of multiple cell phenotypes. A major limitation of current high throughput microscopes is that they cannot physically separate cell types based on their dynamic response to environmental stimuli for further analysis and these methods cannot easily analyse non adherent cells.

On the other hand, FACS devices measure the optical and fluorescence characteristics of single cells. Current FACS devices often use multiple laser lines and filter sets to acquire optical readings for multiple fluorescence probes on cells. In contrast to a high throughput microscopy system, a flow cytometer cannot induce controlled perturbations or changes in the cellular environment. Moreover, the flow cytometer lacks the ability to measure fluorescence kinetics which is especially important when analysing transient cellular responses induced by repeated changes in the cellular environment.

It is an aim of an embodiment or embodiments of the present invention to improve upon these known methods by providing an apparatus and method which allows for a cellular response to multiple given stimuli to be monitored and measured in real time.

### Summary of the Invention

According to an aspect of the invention there is provided an apparatus for studying and analysing characteristics of a cellular sample, the apparatus comprising: a primary flow path through which one or more cells of a cellular sample may be passed, in use, the primary flow path being configured such that an environmental stimulus is applied to the one or more cells as the one or more cells are passed through the primary flow path; an imaging module configured to obtain: a first image or image set of the one or more cells of the cellular sample prior to application of the environmental stimulus; and a second image or image set of the one or more cells following application of the environmental stimulus; and an image analysis module configured to analyse the first and/or second images or image sets and determine a response of the one or more cells to the applied environmental stimulus in dependence thereon.

Advantageously, the apparatus of the present invention allows for a user to measure a response of cells within a cellular sample in real time, by monitoring both before and after an environmental stimulus is applied to the cells within the sample.

The response of the one or more cells may be a change in a cellular characteristic. For example, in some embodiments the response may comprise a change in a fluorescence of the one or more cells (e.g. from one or more optical probes associated with the cells) in response to the environmental stimulus applied by or within the primary flow path. The change in fluorescence may be indicative of the phenotype of the cell(s) being analysed, or a particular phenotypic response to the associated environmental stimulus.

The second image or image set may comprise one or more images obtained after a first time period following the initial exposure of the cell(s) to the stimulus and one or more images obtained after a second time period following the initial exposure of the cell(s) to the stimulus. The second time period may be longer than the first. In embodiments, the second image or image set comprises images obtained at different time points following the initial exposure of the cell(s) to the stimulus. In this manner, the apparatus may be configured to measure snapshots of the response of the one or more cells to the stimulus over time.

The apparatus may comprise a cell loading flow path through which the cellular sample may be passed. The apparatus may be configured such that an image or image set of one or more cells within the cellular sample when within the cell loading flow path may be obtained. This may be the first image or image set which may also be used by the image analysis module to determine the response of cells to the stimulus applied in the primary flow path. The image analysis module may be configured to analyse image data obtained of cells within the cellular sample when present within the cell loading flow path and determine on the basis thereof the suitability of one or more cells for further investigation (e.g. transfer into the primary flow path). For example, imaging cells within a cell loading flow path may be used to select one or more cells from the cellular sample prior to the application of an environmental stimulus (e.g. prior to transferring to the primary flow path), acting as a pre-filter of the cellular sample.

In embodiments the apparatus may comprise a cell sorter. The cell sorter may be operable, in use, to sort (e.g. separate cells from) the cellular sample in dependence on the determined response of said cell(s) to the environmental stimulus applied thereto. The cell sorter may be configured to separate one or more cells from the cellular sample in dependence on a determined change in fluorescence of said cell(s) - e.g. a change in fluorescence in response to the environmental stimulus applied within the primary flow path which is determined through analysis (and comparison) of the first and second images or image sets by the image analysis module.

Advantageously, the apparatus may be operable to allow users to measure changes in cellular characteristics in real time and sort said cells based on exhibited responses based on real time analysis (and comparison) of the first and second images or image sets by the image analysis module.

The cell sorter may be operable to separate a cell from the cellular sample in dependence on an intensity of an observed fluorescence. For example, the cell sorter may be operable to separate a cell from the cellular sample if the cell exhibits a change in fluorescence (e.g. it begins to fluoresce) at an observed intensity which is greater than or equal to a threshold intensity. The threshold intensity may be dependent on a predicted maximum intensity level. For example, in embodiments, the cell sorter may be operable to separate a cell from the cellular sample if the cell exhibits a fluorescence at or above a threshold intensity, the threshold intensity being at least 50%, or at least 60%, or at least 70%, or at least 75%, or at least 80% of a predicted maximum intensity level. The threshold intensity may be a set threshold intensity for all cells within the sample, or may be unique to a particular cell. For example, the threshold intensity for a particular cell may be determined relative to a level of fluorescence of that cell prior to the application of the environmental stimulus. The thresholds may be chosen adaptively, in general, real-time analysis will be as complex as needed for the classification task and can include approaches such as thresholding, machine-learning, etc.

The apparatus may comprise a secondary flow path. The secondary flow path may be configured such that one or more cells of a cellular sample may be passed therethrough, in use. The secondary flow path may be configured such that an environmental stimulus is applied to the one or more cells as the one or more cells are passed through the secondary flow path. The environmental stimulus applied to the one or more cells in the secondary flow path may be the same as, but is preferably different to, the environmental stimulus applied to the one or more cells within the primary flow path. Alternatively, the secondary flow path may be a final cell collection flow path through which the cellular sample may be passed (with or without application of a further stimulus) and leads towards a cell collection outlet.

Advantageously, the apparatus of the invention may allow users to measure a cellular response of a sample when exposed to multiple different combinations of stimuli in real time, and further allow the user to sort the cells based on the observed responses, e.g. an antibody activating an intracellular pathway leading to change in the intracellular calcium, a glucose sensing mechanism activating vesicles exocytosis, coupling of a neuropeptide to a g-protein coupled receptor and activation of intracellular cyclic adenosine monophosphate, an electrical stimulus leading to a mechanical or shape changing response, a mechanical stimulus leading to an intracellular ion influx, or other stimulus of, for example, an electrical, mechanical, or chemical nature that may lead to a response that can be read out electrically, mechanically, via a shape change, an absorbance change, or a suitable fluorescent sensor change, using the imaging apparatus.

The environmental stimulus may comprise a set of stimuli applied at the same time, e.g. within the same flow path.

In embodiments, the cell sorter may be operable to transfer one or more cells from the cellular sample between the primary and secondary flow paths. For example, in some embodiments, the cell sorter may be operable to transfer one or more cells from the primary flow path to the secondary flow path. Such a cell sorter may be referred to herein as a primary cell sorter. The (primary) cell sorter may be operable to transfer one or more cells from the primary flow path to the secondary flow path in dependence on a response of said cell(s) to the environmental stimulus applied thereto in the primary flow path. For instance, in some embodiments the (primary) cell sorter may be operable to transfer cells which exhibit a response (e.g. a change in fluorescence) to the environmental stimulus applied in the primary flow path to the secondary flow path, with that transferred cell or cells then subsequently having a second environmental stimulus applied thereto in the secondary flow path.

The (primary) cell sorter may comprise a dielectrophoretic cell sorter. For example, the (primary) cell sorter may comprise a pair of electrodes operable to generate a non-uniform electric field within the primary flow path in the vicinity of the cell sorter, which may be proximal to an interface between the primary flow path and the secondary flow path. In use, by activating and deactivating the electric field produced by the electrodes, the sorter may be "switched on" or "switched off'. In embodiments, when activated, the (primary) cell sorter may be operable to generate an electric field which causes movement of cell(s) local to the cell sorter from the primary flow path to the secondary flow path, e.g. via an intermediary channel proximal to the location of the sorter. When deactivated, the absence of the electric field is such that the cell(s) within the primary flow path may flow past the (primary) cell sorter and continue to flow along a subsequent portion of the primary flow path, rather than being transferred to the secondary flow path. The intermediary channel may be between 10-200 µm, or between 25-150 µm, or between 50-125 µm, such as approximately 90 µm in length, for example.

The electrodes of the dielectrophoretic primary cell sorter may be provided substantially parallel to one another. The electrodes may be provided substantially parallel to the direction of fluid flow along the primary flow path. Alternatively, the electrodes may be provided substantially perpendicular to the direction of fluid flow along the primary flow path. In yet further embodiments, the electrodes may be provided at an angle with respect to the direction of fluid flow along the primary flow path. For example, in some embodiments the electrodes may be provided at an angle of approximately 45 degrees with respect to the direction of fluid flow along the primary flow path, although other configurations may be desirable. The preferred angle may be dependent on the size of the electrodes, the content of the cellular sample and the flow rate of the sample along the flow path.

In embodiments, the electrodes may span the width of the primary flow path between opposing walls thereof. The primary flow path may comprise one or more grooves in one or more walls thereof into which at least a portion of one or both electrodes of the (primary) cell sorter may be located, in use. The one or more grooves may be configured to maximise the exposure of the electrodes to one another when provided at an angle with respect to the direction of fluid flow along the flow path. In some embodiments, the one or more grooves may comprise a v-shaped groove in a wall of the primary flow path into which at least one of the electrodes of the primary cell sorter is located, in use. By configuring the electrodes and flow path in this manner, the electrodes may be arranged in such a manner that they are exposed to one another along the entire length of the electrodes, even where said electrodes are provided at an angle with respect to the direction of fluid flow along the flow path. Advantageously, this allows for larger electrodes to be used, with greater exposure to one another along their lengths, thereby improving the force generated by the electric field provided by said electrode arrangement and ultimately improving the sorting capability of the primary cell sorter.

In embodiments, the imaging module may be configured to obtain a third image or image set of the one or more cells following application of the environmental stimulus associated with the secondary flow path. In such embodiments, the image analysis module may be configured to analyse the second and/or third images or image sets and determine a response of the one or more cells to the applied environmental stimulus within the secondary flow path in dependence thereon.

In embodiments, the apparatus may comprise a tertiary flow path. The tertiary flow path may be configured such that one or more cells of a cellular sample may be passed therethrough, in use. The tertiary flow path may be configured such that an environmental stimulus is applied to the one or more cells as the one or more cells are passed through the tertiary flow path. The environmental stimulus applied to the one or more cells in the tertiary flow path may be the same as, but is preferably different to, the environmental stimulus applied to the one or more cells within the primary and/or secondary flow paths. Alternatively, the tertiary flow path may be a final cell collection flow path through which the cellular sample may be passed (with or without application of a further stimulus) and leads towards a cell collection outlet.

The apparatus may comprise a secondary cell sorter, operable in use to transfer one or more cells from the cellular sample between the secondary and tertiary flow paths. For example, in some embodiments, the secondary cell sorter may be operable to transfer one or more cells from the secondary flow path to the tertiary flow path. The secondary cell sorter may be operable to transfer one or more cells from the secondary flow path to the tertiary flow path in dependence on a response of said cell(s) to the environmental stimulus applied thereto in the secondary flow path. For instance, in some embodiments the cell sorter may be operable to transfer cells which exhibit a response (e.g. a change in fluorescence) to the environmental stimulus applied in the secondary flow path to the tertiary flow path, with that transferred cell or cells then subsequently having a third environmental stimulus applied thereto in the tertiary flow path.

The secondary cell sorter may be configured in substantially the same manner as the primary cell sorter described herein. For instance, the secondary cell sorter may be a dielectrophoretic cell sorter configured in substantially the same manner as the primary dielectrophoretic cell sorter described above. The secondary flow path may comprise one or more grooves in a wall thereof, which may be configured in substantially the same manner as the one or more grooves optionally provided in the wall of the primary flow path and as described hereinabove.

The apparatus may comprise a cell loader, operable in use to transfer one or more cells from the cellular sample from the cell loading flow path to the primary flow path. The cell loader may be operable to transfer one or more cells from the cell loading flow path to the primary flow path in dependence on image data obtained of the cellular sample and/or one or more cells thereof when in the cell loading flow path. For instance, in some embodiments the cell loader may be operable to transfer cells which are deemed suitable for further investigation on the basis of the image data.

The cell loader may be operable to selectively transfer individual cells from the cell loading flow path to the primary flow path with a particular time interval and or spacing. In this way, the cell(s) loaded into the primary flow path may be spaced in said flow path as desired or as appropriate to the investigation being conducted.

The cell loader may be configured in substantially the same manner as the primary or secondary cell sorter described herein. For instance, the cell loader may be a dielectrophoretic cell loader configured in substantially the same manner as the primary or secondary dielectrophoretic cell sorters described above. The cell loading flow path may comprise one or more grooves in a wall thereof, which may be configured in substantially the same manner as the one or more grooves optionally provided in the wall of the primary or secondary flow paths as described hereinabove.

In alternative embodiments, the primary and/or secondary cell sorters, and/or the cell loader may alternatively comprise an acoustophoretic sorter/loader, a linear optical trap, or a microvalve arrangement, for example.

In embodiments, the imaging module may be configured to obtain a fourth image or image set of the one or more cells following application of the environmental stimulus associated with the tertiary flow path. In such embodiments, the image analysis module may be configured to analyse the third and/or fourth images or image sets and determine a response of the one or more cells to the applied environmental stimulus within the tertiary flow path in dependence thereon.

The imaging module may comprise a single module operable to obtain the first, second, third and/or fourth images or image sets. In such embodiments, the first, second, third and/or further images or image sets may comprise sub-image(s) of master image(s) obtained by the imaging module. Alternatively, the imaging module may comprise a plurality of sub units, each sub unit being operable to obtain one of the first, second, third or fourth images or image sets. For example, each sub unit may be located at a position associated with the relevant flow path or be operable to image the relevant flow path at that position. For example, a first sub unit may be positioned at or proximal to a location at which the one or more cells of the cellular sample are introduced to the primary flow path. In such embodiments, a second sub unit may be positioned relevant to the primary flow path downstream of the first sub unit such that it may be operable to obtain an image or image set of one or more cells following application of the environmental stimulus associated with the first flow path - i.e. by the cell(s) flowing along said primary flow path between the locations of the first and second sub units. The location of the second sub unit may be immediately upstream of the (primary) cell sorter, such that the (primary) cell sorter may separate one or more cells of the cellular sample in dependence on the obtained image(s) from the second sub unit. The third and fourth sub units may be configured similarly with respect to corresponding flow paths.

The primary, secondary and/or tertiary flow path (where present) may comprise a resistance loop. The resistance loop may be configured to control a flow rate or pressure along the respective flow path. By controlling the flow rate of the cellular sample along a particular flow path the apparatus is configured to control the time for which the environmental stimulus associated with that flow path is applied to the one or more cells of the cellular sample between obtaining the pre and post stimulus image(s) of the cell(s).

The apparatus may be configured such that the environmental stimulus applied within the primary, secondary and/or tertiary flow paths (where present), between obtaining the pre and post stimulus image(s) of the cell(s) may be at least 5 minutes, or up to 5 minutes, or up to 2 minutes, or up to 1 minute, for example. The apparatus may be configured such that the environmental stimulus applied within the primary, secondary and/or tertiary flow paths (where present), between obtaining the pre and post stimulus image(s) of the cell(s) may be at least 1 second, or at least 5 seconds, or at least 10 seconds, or at least 30 seconds, for example. The apparatus may be configured such that the environmental stimulus applied within the primary, secondary and/or tertiary flow paths (where present), between obtaining the pre and post stimulus image(s) of the cell(s) may be between 0 - 5 minutes, or between 1 second and 2 minutes, or between 1 second and 1 minute, or between 1 second and 30 seconds, or between 1 second and 10 seconds, or between 2 seconds and 10 seconds, for example.

In embodiments, the apparatus comprises primary and secondary resistance loops, associated with the primary and secondary flow paths, respectively. In such embodiments, the length of the secondary resistance loop may be longer than the length of the primary resistance loop such that the flow rate of a solution passing along the primary flow path is greater than the flow rate of a solution passing along the secondary flow path. Advantageously, unwanted contamination between flow paths may be reduced or avoided.

Where present, a tertiary flow path may be provided with a tertiary resistance loop. The length tertiary resistance loop may be longer than the length of the secondary resistance loop such that the flow rate of a solution passing along the secondary flow path is greater than the flow rate of a solution passing along the tertiary flow path, again to prevent or reduce contamination between flow paths.

The apparatus may comprise one or more flow sensors for monitoring the flow rate along the primary, secondary and/or tertiary flow paths. The apparatus may be configured such that the flow rate of fluid along the flow path(s) may be controlled in dependence on the monitored flow rate using the one or more flow sensors.

The cell sorting, primary, secondary and/or tertiary flow paths may comprise channels. The channels may be provided on a microfluidic chip. The channels may comprise a width of between 5 - 50 µm, or between 10-40 µm, or between 20-35, for example, such as approximately 30 µm.

According to an aspect of the invention there is provided a method for studying and analysing characteristics of a cellular sample, the method comprising: passing one or more cells of a cellular sample along a primary flow path and applying an environmental stimulus thereto; obtaining: a first image or image set of the one or more cells of the cellular sample prior to application of the environmental stimulus; and a second image or image set of the one or more cells following application of the environmental stimulus; and analysing the first and/or second images or image sets to determine a response of the one or more cells to the applied environmental stimulus in dependence thereon.

The response of the one or more cells may be a change in a cellular characteristic. For example, in some embodiments the response may comprise a change in a fluorescence of the one or more cells (e.g. from one or more optical probes associated with the cells) in response to the environmental stimulus applied by or within the primary flow path. The change in fluorescence may be indicative of the phenotype of the cell(s) being analysed, or a particular phenotypic response to the associated environmental stimulus.

The second image or image set may comprise one or more images obtained after a first time period following the initial exposure of the cell(s) to the stimulus and one or more images obtained after a second time period following the initial exposure of the cell(s) to the stimulus. The second time period may be longer than the first. In embodiments, the second image or image set comprises images obtained at different time points following the initial exposure of the cell(s) to the stimulus.

The method may comprise transferring one or more cells of the cellular sample from a cell loading flow path to the primary flow path. The method may comprise obtaining an image or image set of one or more cells within the cellular sample when within the cell loading flow path. This may be the first image or image set which may also be used to determine the response of cells to the stimulus applied in the primary flow path. The method may comprise analysing image data obtained of cells within the cellular sample when present within the cell loading flow path and determining on the basis thereof the suitability of one or more cells for further investigation and transfer into the primary flow path by means of the previously described cell loader. For example, imaging cells within a cell loading flow path may be used to select one or more cells from the cellular sample prior to the application of an environmental stimulus, acting as a pre-filter of the cellular sample.

The method may comprise sorting (e.g. separating specific cells from) the cellular sample in dependence on the determined response of said cell(s) to the environmental stimulus applied thereto. One or more cells may be separated from the cellular sample in dependence on a determined change in fluorescence of said cell(s) in response to the environmental stimulus applied within the primary flow path determined through analysis (and comparison) of the first and second images or image sets.

The method may comprise separating a cell from the cellular sample in dependence on an intensity of an observed fluorescence. For example, the method may comprise separating a cell from the cellular sample if the cell exhibits a change in fluorescence (e.g. it begins to fluoresce) at an observed intensity which is greater than or equal to a threshold intensity. The threshold intensity may be dependent on a predicted maximum intensity level.

For example, in embodiments, the method may comprise separating a cell from the cellular sample if the cell exhibits a fluorescence at or above a threshold intensity, the threshold intensity being at least 50%, or at least 60%, or at least 70%, or at least 75%, or at least 80% of a predicted maximum intensity level.

The threshold intensity may be a set threshold intensity for all cells within the sample, or may be unique to a particular cell. For example, the threshold intensity for a particular cell may be determined relative to a level of fluorescence of that cell prior to the application of the environmental stimulus. The thresholds may be chosen adaptively, in general, real-time analysis will be as complex as needed for the classification task and can include approaches such as thresholding, machine-learning, etc.

The method may comprise passing one or more cells of a cellular sample through a secondary flow path. A secondary environmental stimulus may be applied to the one or more cells as the one or more cells are passed through the secondary flow path. The environmental stimulus applied to the one or more cells in the secondary flow path may be the same as, but is preferably different to, the environmental stimulus applied to the one or more cells within the primary flow path. In alternative embodiments, the secondary flow path may constitute a final cell collection flow path leading to a cell collection outlet.

The method may comprise transferring one or more cells from the cellular sample between the primary and secondary flow paths. For example, in some embodiments, the method may comprise transferring one or more cells from the primary flow path to the secondary flow path. The method may comprise transferring one or more cells from the primary flow path to the secondary flow path in dependence on a response of said cell(s) to the environmental stimulus applied thereto in the primary flow path. For instance, in some embodiments the method may comprise transferring cells which exhibit a response (e.g. a change in fluorescence) to the environmental stimulus applied in the primary flow path to the secondary flow path, with that transferred cell or cells then subsequently having a second environmental stimulus applied thereto in the secondary flow path.

The method may comprise the use of a (primary) cell sorter for transferring the cell(s) between primary and secondary flow paths, which may comprise a dielectrophoretic cell sorter, for example of the type described herein.

The method may comprise activating the (primary) cell sorter to generate an electric field which causes movement of cell(s) local to the cell sorter from the primary flow path to the secondary flow path, e.g. via an intermediary channel or an interchannel gap proximal to the location of the sorter. The method may comprise activating (and deactivating) the cell sorter in dependence on the analysis of the first and second images/image sets, for instance to only transfer cells which have exhibited a response to the stimulus applied in the primary flow path.

The method may comprise obtaining a third image or image set of the one or more cells following application of the environmental stimulus associated with the secondary flow path. In such embodiments, the method may comprise analysing the second and/or third images or image sets and determining a response of the one or more cells to the applied environmental stimulus within the secondary flow path in dependence thereon.

The method may comprise passing one or more cells of a cellular sample through a tertiary flow path. A tertiary environmental stimulus may be applied to the one or more cells as the one or more cells are passed through the tertiary flow path. The environmental stimulus applied to the one or more cells in the tertiary flow path may be the same as, but is preferably different to, the environmental stimulus applied to the one or more cells within the primary and/or secondary flow paths. In alternative embodiments, the tertiary flow path may constitute a final cell collection flow path leading to a cell collection outlet.

The method may comprise transferring one or more cells from the cellular sample between the secondary and tertiary flow paths. For example, in some embodiments, the method may comprise transferring one or more cells from the secondary flow path to the tertiary flow path. The method may comprise transferring one or more cells from the secondary flow path to the tertiary flow path in dependence on a response of said cell(s) to the environmental stimulus applied thereto in the secondary flow path. For instance, in some embodiments the method may comprise transferring cells which exhibit a response (e.g. a change in fluorescence) to the environmental stimulus applied in the secondary flow path to the tertiary flow path, with that transferred cell or cells then subsequently having a third environmental stimulus applied thereto in the tertiary flow path.

The method may comprise the use of a secondary cell sorter for transferring the cell(s) between the secondary and tertiary flow paths. The secondary cell sorter may be configured in substantially the same manner as the primary cell sorter described herein.

The method may comprise obtaining a fourth image or image set of the one or more cells following application of the environmental stimulus associated with the tertiary flow path. In such embodiments, the method may comprise analysing the third and/or fourth images or image sets and determining a response of the one or more cells to the applied environmental stimulus within the tertiary flow path in dependence thereon.

The method may comprise controlling a flow rate or pressure along the primary, secondary and/or tertiary flow paths. The method may comprise controlling the flow rate of fluid along the flow path(s) such that the flow rate of a solution passing along the primary flow path is greater than the flow rate of a solution passing along the secondary flow path, and/or the flow rate of a solution passing along the secondary flow path is greater than the flow rate of a solution passing along the tertiary flow path. The method may comprise using one or more flow sensors for monitoring the flow rate along the primary, secondary and/or tertiary flow paths. The method may comprise controlling the flow rate of fluid along the flow path(s) in dependence on the monitored flow rate using the one or more flow sensors.

According to an aspect of the invention there is provided computer software comprising one or more instructions which, when executed by one or more processors, cause operation of the method of the preceding aspect of the invention.

According to an aspect of the invention there is provided a computer readable medium comprising the computer software of the preceding aspect of the invention.

### Detailed Description of the Invention

In order that the invention may be more clearly understood one or more embodiments thereof will now be described, by way of example only, with reference to the accompanying drawings, of which:
- Figure 1: is a schematic overview of an embodiment of an apparatus in accordance with the invention;
- Figure 2: is a schematic overview showing part of a further embodiment of an apparatus of the invention;
- Figures 3A - 3D: are a series of cross-sectional schematic views illustrating the present invention;
- Figure 4: is a further schematic view of the embodiment of the invention shown in Figure 1;
- Figure 5: is a schematic view of the variant shown in Figures 2 - 3D;
- Figures 6A - 6D: are a series of illustrations showing experimental data obtained in Example 1 discussed herein; and
- Figures 7A - 7E: are a series of illustrations showing experimental data obtained in Example 2 discussed herein.

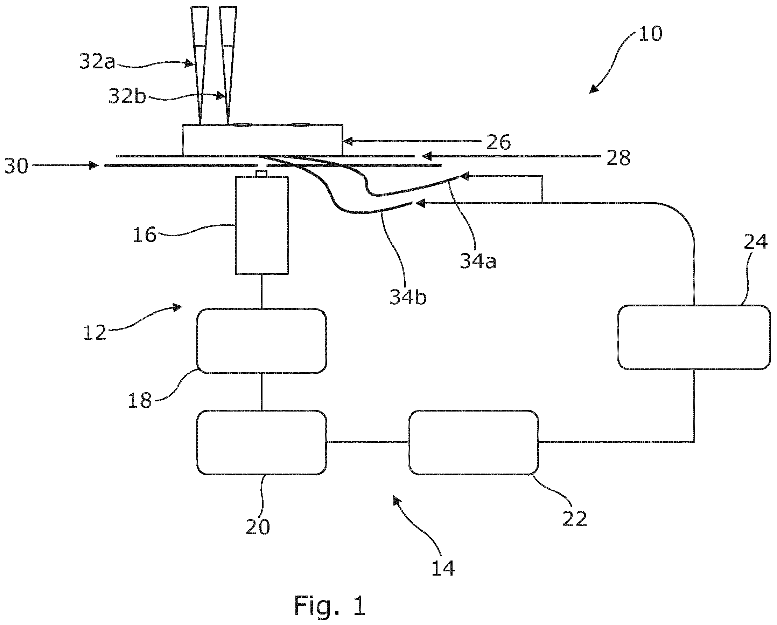

Figures 1 - 5 illustrate embodiments of an apparatus 10 in accordance with the invention.

The apparatus 10 includes a microfluidic chip 26 within which are provided a cell loading, a primary and (optionally) a secondary flow path in the form of microfluidic channels 40a, 40b, 40c, referred to here interchangeably as channel 1, channel 2 and channel 3, respectively. In Figure 1, two channels (channel 1 - 40a, and channel 2 - 40b) are provided, with respective inputs 32a, 32b for introducing a fluid sample into said channels. Typically, cells to be analysed/sorted are introduced into channel 1 40a, via input 32a, only. Channel 2 (and channel 3, where present) typically include an environmental stimulus to interact with cells from the cellular sample when transferred into those channels. Environmental stimuli may include a fluid solution containing a particular antibody, for example, with the apparatus 10 being configured for use in monitoring the response of cells within the cellular sample in the presence of that antibody. As described in detail herein, channels 1 and 2 are fluidly connected downstream of the inputs 32a, 32b (specifically via intermediary channel 44a) such that cells from a cellular sample passed through channel 1 may be selectively moved into channel 2 as desired or required.

The chip 26 is provided on a slide 28 and attached to a stage 30 of a microscope 16 forming part of an imaging module 12 of apparatus 10. Here the microscope comprises an epifluorescent microscope, although the invention is not limited in this sense. In this specific embodiment, the microscopy light source is a blue light emitting diode (LED) whose beam is passed through a bandpass filter and is reflected by a dichroic mirror through a 20x objective (NA 0.9) of the microscope 16 onto the imaging area of the microfluidic chip 26. Fluorescent light emitted by the sample is returned through the microscope objective, passes straight through the dichroic mirror and is reflected by an ordinary mirror via a tube lens towards the objective of a digital camera 18. Configuring the setup in this manner allows for the camera 18 to be used to obtain image data of a cellular sample within multiple channels of the chip 26.

Image data obtained by the camera 18 is processed and analysed by an image analysis module 14 which includes a processing means 20 having computer readable instructions stored thereon, and an I/O device 22 for outputting information relating to the analysed image data for subsequent processing steps. In the presently illustrated embodiment, the I/O device 22 is configured to output a control signal to a function/pulse generator 24 for controlling operation of a cell sorter in the form of an electrode pair 42a, 42b; 42c, 42d as described in detail, below. The apparatus 10 includes wired connections 34a, 34b between the generator 24 and the electrodes for controlling operation thereof.

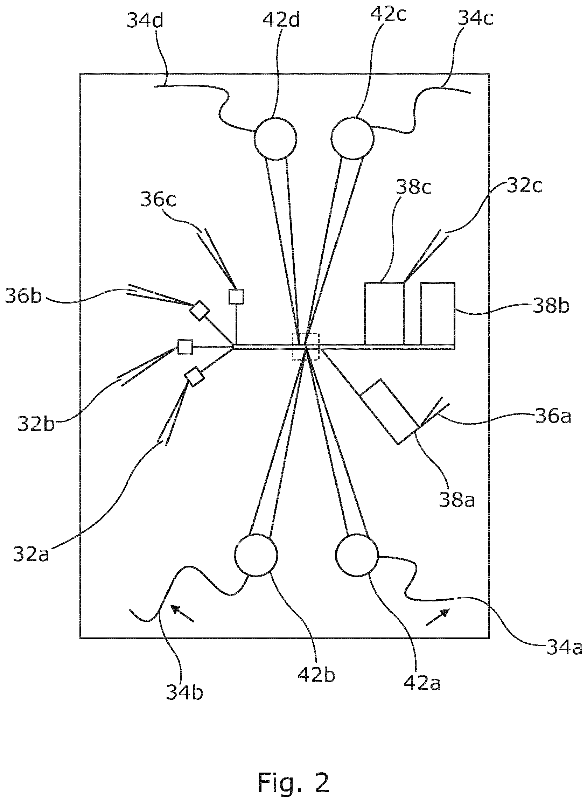

Figure 2 illustrates a variation of apparatus 10 and gives details of the setup of the channels (flow paths) within a microfluidic chip and details of the positioning of electrodes with respect to the microfluidic channels. The variation of apparatus 10 illustrated in Figure 2 includes a secondary flow path - channel 3 - 40c. Channel 3 40c includes an input 32c configured in the same manner as input 32b of channel 2. As described in detail below, channel 2 and channel 3 are fluidly connected such that cells within a cellular sample passed through channel 2 may be selectively moved into channel 3, as required/desired by the user.

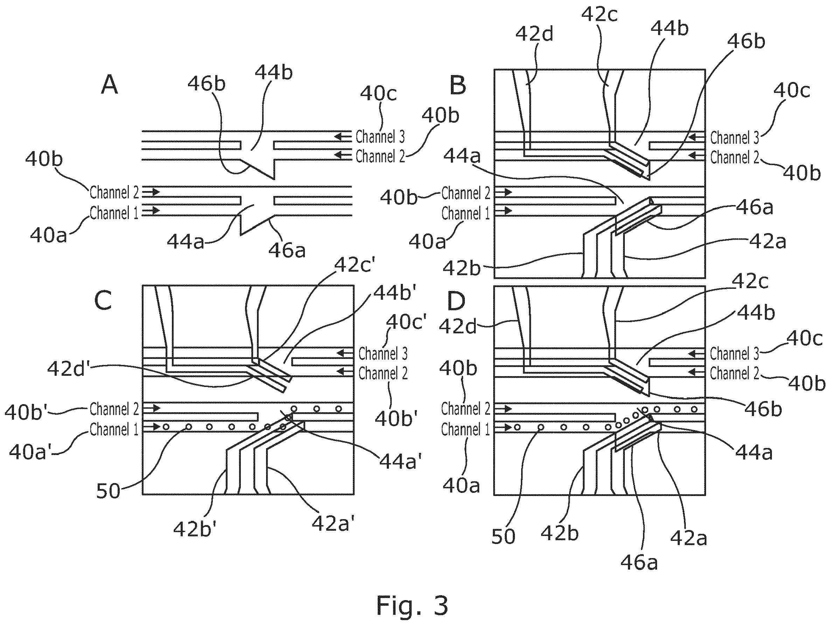

Figure 2 further illustrates cell loaders/sorters and their use thereof in apparatus 10. Specifically, apparatus 10 includes a cell loader which comprises first and second primary electrodes 42a, 42b which are positioned such that ends thereof project into and across a width of channel 1, proximal to an intermediary channel 44a fluidly connecting channels 1 and 2. Similarly, a cell sorter is provided which includes first and second secondary electrodes 42c, 42d positioned such that ends thereof project into and across a width of channel 2, proximal to an intermediary channel 44b fluidly connecting channels 2 and 3. Turning to Figures 3B and 3D specifically, it is shown how the ends of electrodes 42a, 42b; 42c, 42d are angled with respect to a direction of flow along the corresponding channels.

As described in detail herein, the cell loader and cell sorter are configured in substantially the same manner and may be used to selectively separate individual cells 50 from a cellular sample, specifically moving cells from channel 1 to channel 2 (cell loader), and from channel 2 to channel 3 (cell sorter) as required.

Each of channels 1 to 3 is provided with a resistance loop, 38a, 38b, 38c respectively each configured to control the flow rate of fluid through the channels as required. In the illustrated embodiment, the length of the resistance loops may be progressively larger moving from channel 1 to channel 3 such that the flow rate through channel 2 is slower than that through channel 1, and the flow rate through channel 3 is slower still. This may ensure minimal or no contamination between channels other than upon selective sorting of cells between channels in the manners described herein. Each of channels 1 to 3 further include respective outlets 36a, 36b, 36c.

Figures 3A - 3D illustrate a further feature of apparatus 10, and in particular grooves 46a, 46b provided within the walls of channels 1 and 2 at the location of the electrodes 42a, 42b; 42c, 42d. As shown, the grooves 46a, 46b are v-shaped grooves shaped to receive the angled end portions of electrode 42b of the cell loader, and electrode 42d of the cell sorter. The other of the electrodes of the two electrode pairs is then provided spaced apart from but parallel to corresponding electrode 42b, 42d and within the channel. Configuring the electrodes 42a, 42b; 42c, 42d and channels 1 and 2 in this manner allows for the electrodes to be arranged in such a manner that they are exposed to one another long the entire length thereof, having an aqueous phase between the electrodes along the entire length of the functional part of the electrodes (e.g. the angled end portions - where dielectropheresis occurs). Advantageously, this allows for larger electrodes to be used, with greater exposure to one another along their lengths, thereby improving the electric field provided by said electrode arrangement and ultimately improving the sorting capability of the cell sorters. This is illustrated in particular with reference to Figures 3C and 3D.

In Figure 3C, the illustrated apparatus does not include the v-shaped groove within the wall of either channel 1 or channel 2. In contrast, Figure 3D illustrates apparatus 10 where the grooves 46a, 46b are provided. As illustrated representatively by cells 50, the effectiveness of the sorting provided by these two arrangements is shown, with the cells 50 in Figure 3D being sorted more gradually across the entire length or diagonal of the intermediary channel 44a, whereas in Figure 3C the sorting is more abrupt.

Importantly, in Figure 3D, the sorted cells tend to move under a dielectrophoretic effect along an outer edge of electrode 42b, 42d and do not tend to penetrate the region between the electrodes. In contrast, in Figure 3C the cells are much more likely to penetrate into this region given the lower sorting capability of this arrangement. This is problematic due to the high electric field between the electrodes when activated which can lead to electroporation of cells which enter this region.

The operational use of apparatus 10 and variants thereof is now described with reference to Figures 1 - 5.

As discussed herein, the apparatus 10 may be used to analyse the response of a given cellular sample, and individual cells within that sample to a particular environmental stimulus applied within one or more of the channel(s), and optionally sort said cells on the basis of that analysis - e.g. to separate cells from a particular cellular sample which are shown to have shown a reaction to a particular stimulus through exhibiting a change in fluorescence.

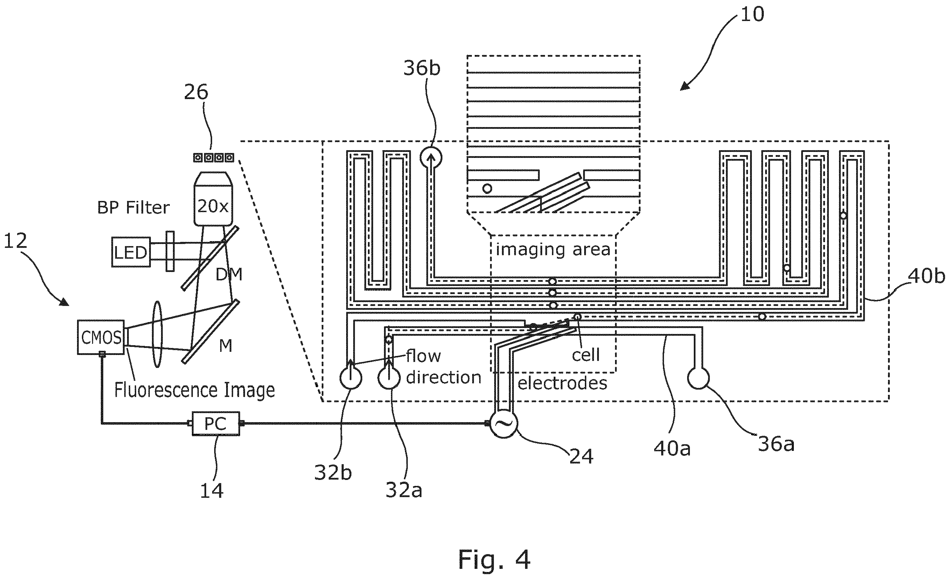

Turning specifically to Figure 4, a 2-channel variant of apparatus 10 is shown. Here, the apparatus 10 includes a cell loading flow path (channel 1) 40a and a stimulus-containing (primary) flow path, channel 2 40b. The direction of the laminar flows in the channels is indicated using arrows positioned at the channel inlets 32a, 32b, respectively. In use, cells 50 are displaced from channel 1 into channel 2 via the cell loader. Specifically, electrodes 42a, 42b forming the cell loader may be "switched on" or "switched off' to activate or deactivate the cell loader. When "switched on" a non-uniform electric field is induced in the region of the cell loader, causing cells 50 from within a cellular sample flowing through channel 1 to be moved into channel 2. In particularly advantageous embodiments, real time image data from the camera 18 is used to execute decisions when the electrodes should be switched on and off - to selectively choose which cells are passed into channel 2. As shown, channel 2 contains a resistance loop in which the cells are incubated with the stimulus provided within the channel. The incubation time depends on the length of the resistance loop and the flow speed through the channel. In the illustrated embodiment, channel 2 passes through an imaging area a total of four times providing four time points for the detection of a cell travelling through the channel, the first time point being the time immediately after transfer into channel 2 (i.e. t = 0 s of incubation of the cell with the stimulus), and then set time periods thereafter depending on the flow rate of the fluid within channel 2.

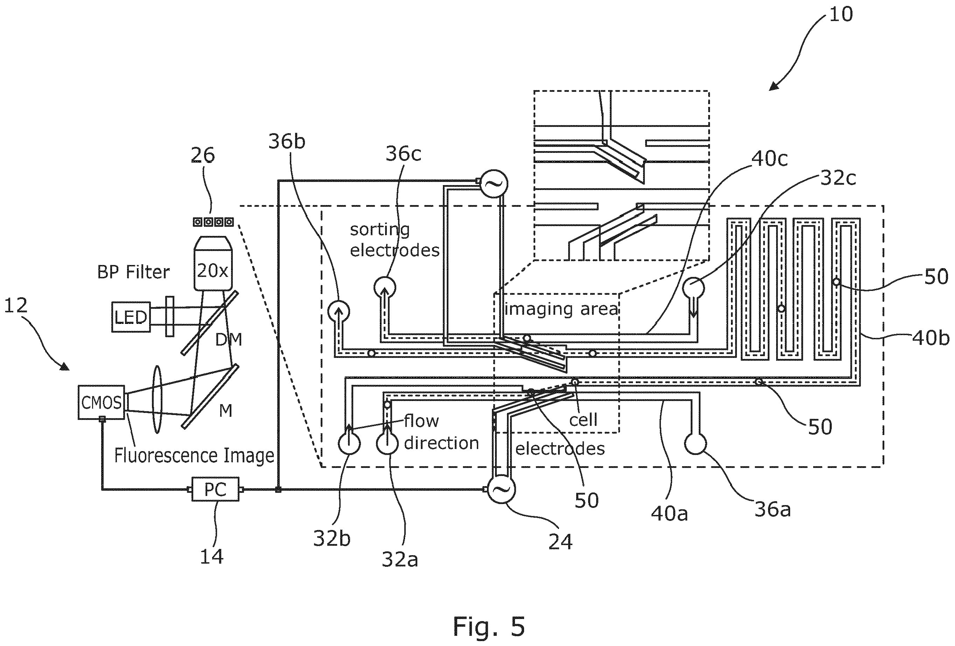

Figure 5 illustrates a 3-channel variant of apparatus 10, including a cell loading flow path (channel 1) 40a, a primary stimulus-containing flow path, channel 2 40b and a secondary flow path, channel 3 40c. This variant builds on that of Figure 4 but incorporates a cell sorting capability. Specifically, in addition to the secondary flow path 40c, a cell sorter is provided in the form of a pair of electrodes 42c, 42d is provided within the primary flow path for moving cells from channel 2 to channel 3. The cell sorter is configured in substantially the same manner as the cell loader, however the electrodes 42c, 42d here forming the cell sorter may be "switched on" or "switched off' to activate or deactivate the cell sorter based on an observed response of the cells to the stimulus applied in the primary flow path. Specifically, real time image data from the camera 18 is used to execute decisions when the electrodes should be switched on and off - to selectively choose which cells are passed into channel 3. In one example, the electrodes may be activated for cells which exhibit a change in fluorescence at or above a threshold level which may be indicative of a given response of the cell to the stimulus. In this manner, cells which are responsive to a given stimulus may be separated from those which are unresponsive and may be extracted from the apparatus 10 through respective channel outlets 36b, 36c. The sorted cells can then be used for further analysis, or for example the proportion of responsive cells could be used as an indicator of the effectiveness of a given stimulus on a cellular sample.

The one or more embodiments are described above by way of example only. Many variations are possible without departing from the scope of protection afforded by the appended claims.

### Examples

### Example 1 - 3-channel microfluidic chip with cell sorting

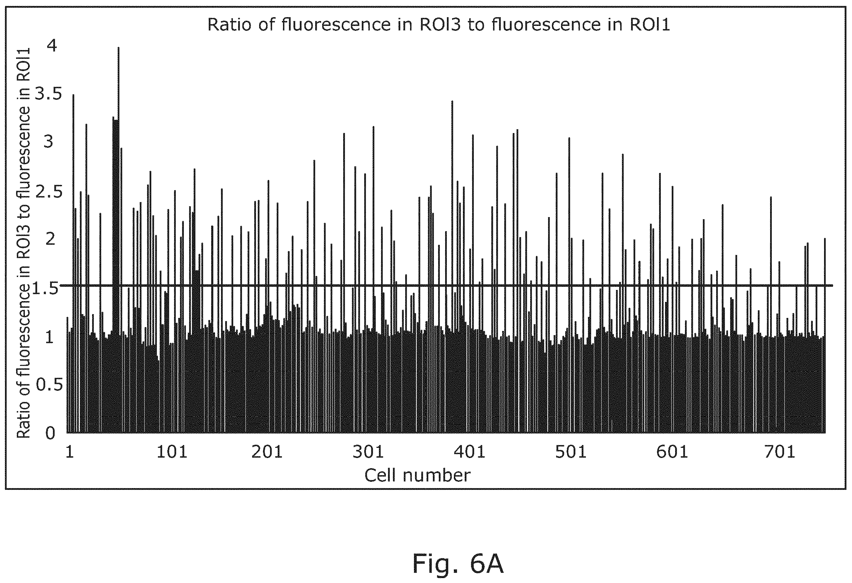

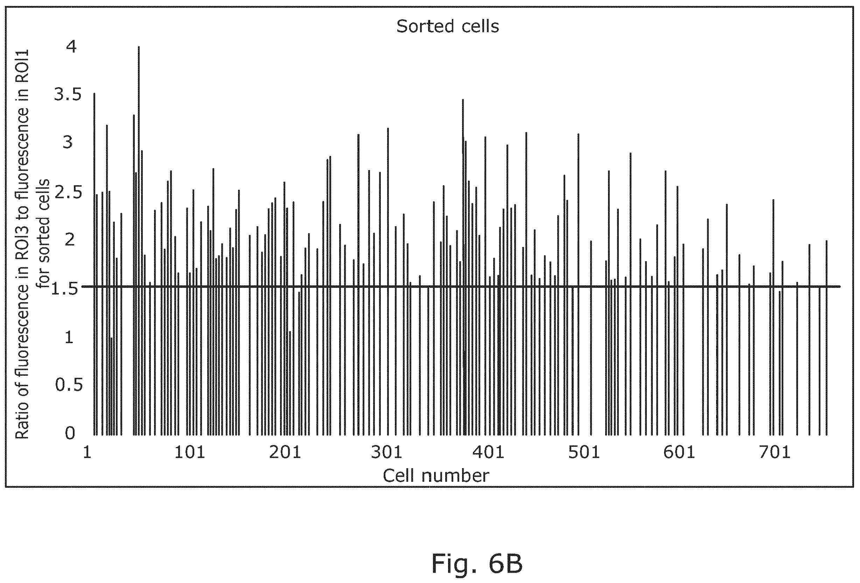

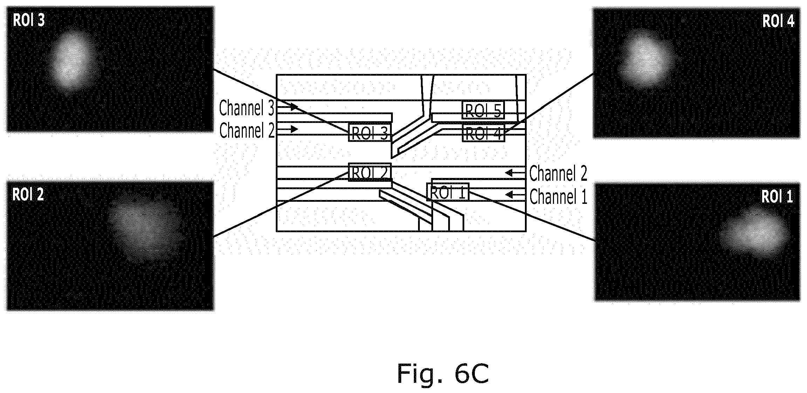

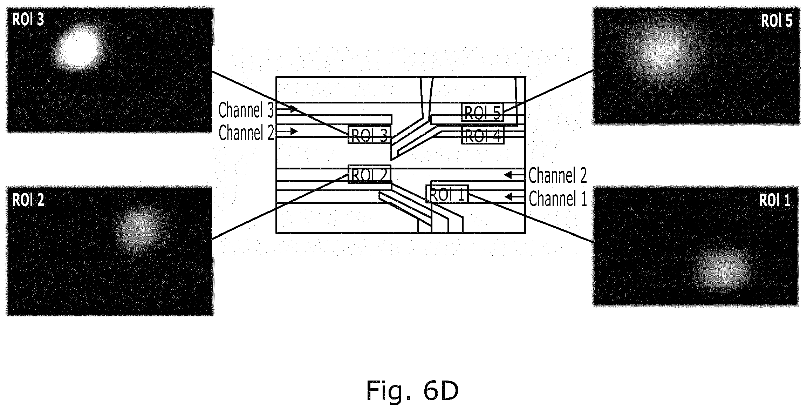

Data combined from three separate experiments performed on three different dates in three separate microfluidic chips is described below. Fluo-4 loaded Ramos cells in media were introduced into channel 1, a 25 µg/mL solution of antibody M15/8 in media was flown through channel 2 and pure media was flown through channel 3. The devices were run for 67 min, 109 min and 187 min respectively during the three separate experiments. A total of 753 cells were deflected into channel 2 by negative dielectrophoresis in a manner described herein (e.g. via electrodes 42a, 42b) - Figure 4A. The minimum time interval between deflections of cells into channel 2 was set to 15 s. The total cumulative fluorescence of the Ramos cells passing through all five regions of interest was measured and recorded. The ratio of the total cumulative fluorescence in ROI3 of a given cell to its cumulative fluorescence in ROI1 (ROI1 and ROI3 are defined in Figure 6C and 6D) was used to determine the extent to which Ramos cells respond to antibody M15/8. An arbitrary fluorescence increase threshold factor of 1.5 was chosen and cells exhibiting a fluorescence increase ratio greater than 1.5 were classed as responders. Two hundred (26.6%) of the 753 cells, which were exposed to the antibody M15/8 in channel 2 were determined to have responded to the antibody by increasing their total fluorescence by a factor larger than 1.5 and 198 of these responding cells were correctly sorted into channel 3 by negative dielectrophoresis and detected in ROI5 - Figure 6B. Two of the responding cells were not sorted correctly and were detected in ROI4 rather than ROI5, presumably due to ineffective dielectrophoresis (the sorting pair of electrodes were recorded as having been activated for these two cells). One non-responder was incorrectly sorted towards ROI5 because it swapped positions with another cell and therefore the cell tracking algorithm failed for the swapped position cell pair. The other cell in the swapped position pair was, however, by chance sorted correctly. The remaining 555 non-responding cells (i.e. cells which increased their fluorescence by a factor smaller than 1.5 as a result of being exposed to antibody M15/8 in channel 2) did not activate the sorting electrodes and were correctly sorted towards ROI4 rather than ROI5.Responding cells showed an average fluorescence increase ratio (fluorescence in ROI3 to fluorescence in ROI1) of 2.08 and a range between 1.50 and 4.51. Only three out of 753 cells were sorted incorrectly, which gives an estimated sorting efficiency of the instrument of 99.6%.

From the above experimental data it is concluded that the design of the microfluidic chip forming part of the invention is suitable for flowing Ramos cells therethrough and the electrodes are capable of selectively moving cells between channels by negative dielectrophoresis, e.g. based on a determined fluorescence / fluorescence increase. It is further shown that the apparatus is capable of moving Ramos cells from channel 1 into channel 2 of the microfluidic chip at specified time intervals to allow sufficient spacing between the cells in channel 2. Example 1 further illustrates how the apparatus is configured to either sort cells (or not) based on their fluorescence through selectively activating the sorting pair of electrodes.

In this example, 200 out of 753 Ramos cells (26.6%) were shown to increase their fluorescence by a factor larger than 1.5 in response to being exposed to 25 µg/mL of antibody M15/8.

### Example 2 - 2-channel Microfluidic Chip

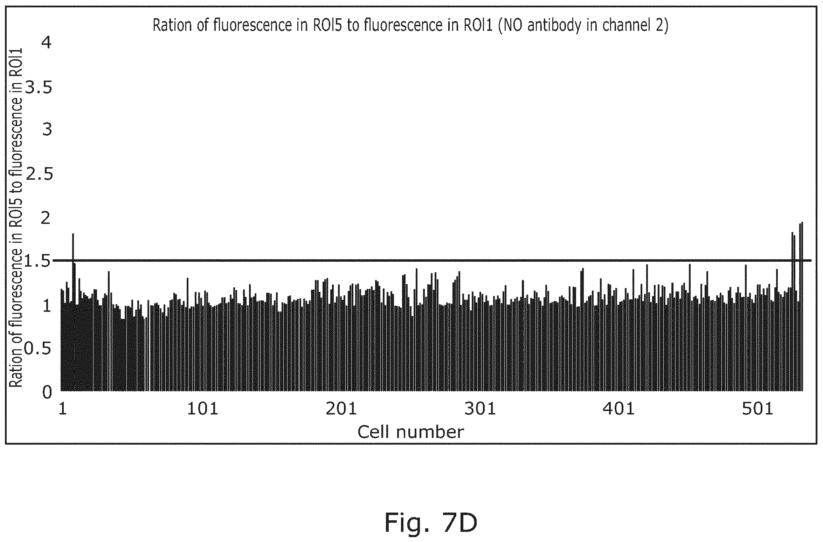

As a control experiment, fluo-4 loaded Ramos cells in media were introduced into channel 1 and Ramos media was flown through channel 2 of the 2-channel microfluidic chip. Two separate control experiments were run on two different dates using two separate microfluidic chips. During the first experiment data for 240 cells in channel 2 was collected over a period of 2h. During the second experiment data for 297 cells was collected over a period of 2h and 34 min. The control experiments confirmed that in the absence of antibody M15/8, the majority of the cells do not significantly change in fluorescence between ROI2 and ROI5 (Figure 7D). Over the two control experiments only 3 (0.6%) of the 537 cells increased their fluorescence by a factor larger than 1.5 between ROI1 and ROI5 (Figure 7D). The average fluorescence increase factor of the Ramos cells between ROI1 and ROI5 was 1.05 over the two control experiments.

For the antibody experiments, fluo-4 loaded Ramos cells in media were introduced into channel 1 and a 25 µg/mL solution of antibody M15/8 in media was flown through channel 2 of the 2-channel microfluidic chip. Four separate experiments were conducted on four different dates using four different microfluidic chips. Over the four experiments the kinetics of the response to antibody M15/8 of a total of 625 Ramos cells were studied.

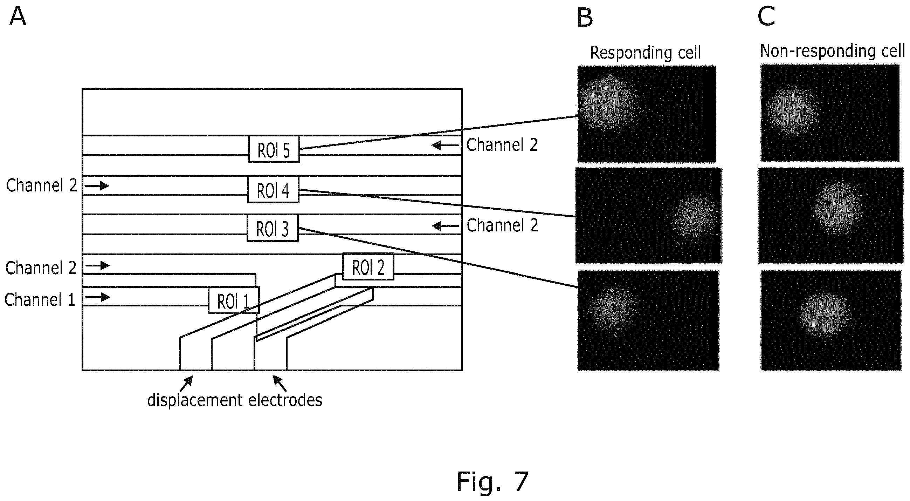

The 625 Ramos cells, which were deflected from channel 1 into channel 2 by di-electrophoresis, were tracked as they travelled along channel 2 - see Figure 7A - and their fluorescence in ROIs 2, 3, 4 and 5 was measured and recorded by the LabVIEW software. Images of the fluorescence of a cell responding to antibody M15/8 and a cell not responding to the antibody in three regions of interest along channel 2 are shown in Figures 7B and 7C respectively.

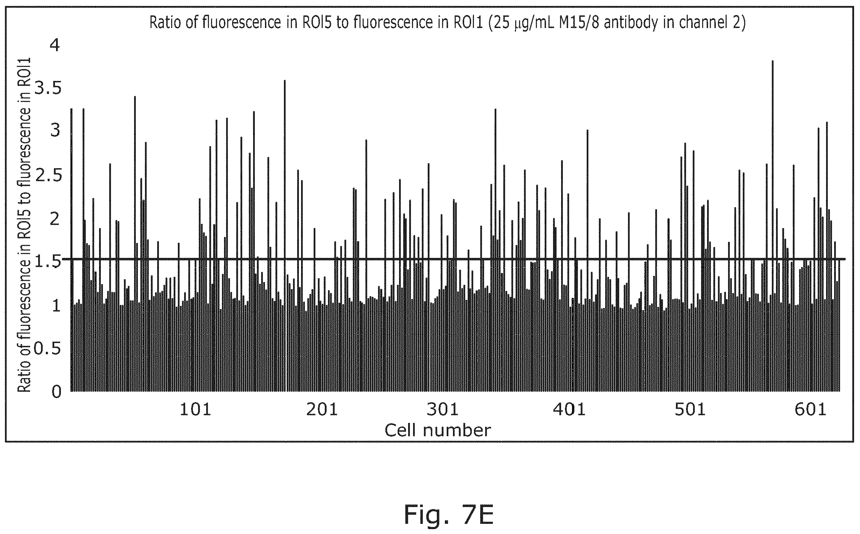

Cells arrived in ROIs 3, 4 and 5 approximately 15s, 35s and 70s respectively after di-electrophoresis and therefore these represent the incubation times of the Ramos cells with antibody M15/8.Cells, which increased their fluorescence by more than 50%, were classed as responding to antibody M15/8 - Figure 7E. 151 (24.2%) of the 625 cells were shown to increase their fluorescence by more than 50% between ROI1 and ROI5. The majority of the cells, which responded to antibody M15/8, did not show a significant increase in fluorescence in ROIs 3 and 4 (15 s and 35 s of incubation with M15/8 respectively) and their response only became evident in ROI4 (i.e. after at least 70 s of exposure to the antibody).

In this example, a two-channel microfluidic chip within the scope of the invention has been shown to be suitable for monitoring the kinetics of the response of Ramos cells to the antibody M15/8. In this example, cell sorting based on an image at ROI1 was not used. 151 out of 625 Ramos cells (24.2%) were shown to increase in fluorescence by more than 50% in response to being exposed to 25 µg/mL of antibody M15/8. This percentage of responding cells is comparable to the percentage (26.6%) observed in Example 1 above.

### Further generic applications

The present invention may be employed in the field of functional peptide, CRISPR-Cas based cell screens, RNA-i screens where a reporter gene gets over/under regulated upon encounter with a chemical or biological stimulus. A fluorescently-labelled binder has to be used to measure such responses. The reporter can also inform on the concentration of certain chemicals present in the cytoplasm (ion indicators, ATP, cAMP).

In the field of Cell Biology, the present invention provides means to sort living cells for further experiments allowing analysis when fluorescent antibodies that specifically target the cell surface of a target cellular type are lacking (this includes many variant human cells). This opens up a wide range of applications, such as preferentially recovering immune cells, parasites or cancer cells from tissue samples. Furthermore, the present invention complements prior antibody technologies and will also provide cheaper and more efficient alternatives for sorting living cells.

In the field of Molecular Biology, the present invention may facilitate the identification of genotype-phenotype and transcriptome-phenotype relationships. Particularly with the advent of single-cell DNA and RNA sequencing, the present invention could be used to sort individual cells with a particular functional phenotype. Sorted cells could be further analysed with genomics and/or transcriptomics and relationships between their functional phenotype and their genome and/or transcriptome could be established. Using this to highlight differences in cell populations in health and disease thus provides valuable insights for medical research and the pharmaceutical industry. Similarly, when working with genetically labelled cell populations, single cell transcriptomics has revealed large heterogeneity among a cell type. Using the present invention is it possible to correlate the functional phenotype with the levels of RNA expression.

In the field of Stem Cell Biology, the present invention may be used in assessing cell differentiation. Coupled with single cell genomics/transcriptomics/proteomics the invention is capable of determining population heterogeneity and helping in the identification of target cells.

## Claims

1. An apparatus for studying and analysing characteristics of a cellular sample, the apparatus comprising:
a primary flow path through which one or more cells of a cellular sample may be passed, in use, the primary flow path being configured such that an environmental stimulus is applied to the one or more cells as the one or more cells are passed through the primary flow path;
an imaging module configured to obtain:
a first image or image set of the one or more cells of the cellular sample prior to application of the environmental stimulus; and
a second image or image set of the one or more cells following application of the environmental stimulus; and
an image analysis module configured to analyse the first and/or second images or image sets and determine a response of the one or more cells to the applied environmental stimulus in dependence thereon.

2. An apparatus as claimed in claim 1, further comprising a cell loader operable, in use, to transfer one or more cells from the cellular sample from a cell loading flow path to the primary flow path.

3. An apparatus as claimed in claim 2, wherein the cell loader is operable to selectively transfer individual cells from the cell loading flow path to the primary flow path with a particular time interval and or spacing.

4. An apparatus as claimed in claim 2 or claim 3, wherein the cell loader is operable to transfer one or more cells from the cell loading flow path to the primary flow path in dependence on image data obtained of the cellular sample and/or one or more cells thereof when in the cell loading flow path.

5. An apparatus as claimed in any preceding claim, further comprising a cell sorter operable, in use, to separate one or more cells from the cellular sample in dependence on the determined response of said cell(s) to the environmental stimulus applied thereto.

6. An apparatus as claimed in claim 5, wherein the cell sorter is configured to separate one or more cells from the cellular sample in dependence on a determined change in fluorescence of said cell(s).

7. An apparatus as claimed in any preceding claim comprising a secondary flow path configured such that one or more cells of the cellular sample may be passed therethrough, in use.

8. An apparatus as claimed in claim 7, wherein the secondary flow path is configured such that an environmental stimulus is applied to the one or more cells as the one or more cells are passed through the secondary flow path.

9. An apparatus as claimed in claim 7 or claim 8, when dependent on claim 5 or any claim dependent thereon, wherein the cell sorter is operable to transfer one or more cells from the cellular sample between the primary and secondary flow paths.

10. An apparatus as claimed in any preceding claim, comprising a tertiary flow path configured such that one or more cells of the cellular sample may be passed therethrough, in use, the tertiary flow path being configured such that an environmental stimulus is applied to the one or more cells as the one or more cells are passed through the tertiary flow path.

11. An apparatus as claimed in any preceding claim, wherein the primary flow path comprises a resistance loop configured to control a flow rate or pressure therealong.

12. An apparatus as claimed in any preceding claim, wherein the primary flow path comprises a channel provided on a microfluidic chip.

13. An apparatus as claimed in claim 12, when dependent on claim 7 or claim 10, wherein the secondary and/or tertiary flow paths comprise channels provided on the microfluidic chip.

14. A method for studying and analysing characteristics of a cellular sample, the method comprising:
passing one or more cells of a cellular sample along a primary flow path and applying an environmental stimulus thereto;
obtaining:
a first image or image set of the one or more cells of the cellular sample prior to application of the environmental stimulus; and
a second image or image set of the one or more cells following application of the environmental stimulus; and
analysing the first and/or second images or image sets to determine a response of the one or more cells to the applied environmental stimulus in dependence thereon.

15. Computer software comprising one or more instruction which, when executed by one or more processors, causes performance of the method of claim 14.
